# EUROPEAN PATENT APPLICATION

(11) **EP 1 638 099 A1**
(43) Date of publication of application: **22.03.2006**
(21) Application number: 04746095.1
(22) Date of filing: 11.06.2004
(51) Int. Cl.: G11B 27/00, G11B 20/10, H04N 5/91

(54) **DATA RECORDING DEVICE AND PROGRAM**

(30) Priority: 20.06.2003 JP 2003176914
(71) Applicant: Konica Minolta Photo Imaging, Inc., Shinjuku-ku, Tokyo 163-0512 (JP)
(72) Inventor: Ueda, Yutaka, Konica Minolta Photo Imaging, Inc., Hachioji-shi, Tokyo 192-8505 (JP)
(74) Representative: Gille Hrabal Struck Neidlein Prop Roos
(86) International application number: PCT/JP2004/008590
(87) International publication number: WO 2005/006334

(57) **Abstract**

A data recording apparatus comprising a read section for reading image data and/or audio data recorded on a first recording medium, and a write section for recording the aforementioned read image data and/or audio data on a second recording medium. This data recording apparatus is further provided with an identification information determining section for determining whether identification information is recorded in the aforementioned recording medium or not, to ensure that, only when the aforementioned identification information determining section has determined that the identification information is recorded, the write section records the read image data/audio data on the second recording medium.

## Description

### FIELD OF THE INVENTION

The present invention relates to a data recording apparatus and program for recording image data and/or audio data on a recording medium.

### TECHNICAL BACKGROUND

Due to widespread use of a digital camera in recent years, a photo shop, convenience store and such related shop provide medium conversion services wherein the image data captured by the digital camera is read into a memory card, and a data recording apparatus is used to write the image data onto other recording media such as a CD-R (Compact Disk-Recordable). According to one of the known techniques, image data is read from a medium storing the data image, and information on the order for image printing is created based on the read image data. Such information is then sent to an image forming apparatus, where the image is printed out.

Further, a proposal has been made of a data recording apparatus whereby a program for a PC (personal computer) to perform special functions is recorded on such a recording medium as a CD-R. The special functions include an image data edit/processing function and a function of reproducing an image file with a BGM (Background Music) using a sound file, thereby opening a slide show. (see Japanese patent laid-open publication No. Tokkai 2001-094910)

When such medium conversion services are provided, however, use of recording areas having the same configuration to the greatest extent possible in a recording medium is preferred to ensure smooth recording operations.

The object of the present invention is to provide a data recording apparatus and program capable of recording image data and/or audio data only to a predetermined recording medium.

### DISCLOSURE OF THE INVENTION

The present invention is intended to solve the aforementioned problems, and this object can be achieved by a data recording apparatus comprising:
a read section for reading image data and/or audio data recorded on a first recording medium; and
a write section for recording the aforementioned read image data and/or audio data on a second recording medium. This data recording apparatus is further provided with an identification information determining section for determining whether identification information is recorded in the aforementioned recording medium or not, to ensure that, only when the aforementioned identification information determining section has determined that the identification information is recorded, the write section records the read image data/audio data on the second recording medium.

Further, it is achieved by a program allowing a computer to perform a read function for reading the image data and/or audio data recorded on the first recording medium, an identification information determining function for determining whether identification information is recorded on the second recording medium or not, and a write function for recording the aforementioned read image data and/or audio data on the second recording medium only when it has been determined that identification information is recorded on the second recording medium.

Here, the image data represents image data for a still image and a moving image. Further the audio data represents voice data, music data and the like.

According to these inventions, only when the identification information has been recorded in the second recording medium, read image data and/or audio data are recorded in the second recording medium, and thus recording of the read image data and/or audio data can be prevented in a recording medium other than the second recording medium in which the identification information has been recorded. Therefore, it becomes possible to use the recording area of the same configuration, resulting in a smooth recording operation.

Further, in these inventions, the aforementioned identification information may be prepaid fee information, writable capacity of data or the number of writable files.

By means of this method, only when prepaid fee information, writable capacity of data or the number of writable files has been recorded in the second recording medium, read image data and/or audio data are recorded in the second recording medium, and thus recording of the read image data and/or audio data can be prevented in a recording medium other than the second recording medium in which the prepaid fee information, the writable capacity of data or the number of writable files has been recorded.

Here, the recording media represent a CD-R, a CD-R/W, a DVD-R, a DVD-R/W, a DVD+R/W, a DVD-RAM, a Blu-ray Disc, an MO disk, a PC card, a SD card, a memory stick, a Smart Media, a Compact Flash (Registered trademark), an xD-Picture card and the like.

### BRIEF DESCRIPTION OF THE DRAWINGS

Fig. 1 is a block diagram showing the functional configuration of the data recording apparatus 1 as an embodiment of the present invention;
Fig. 2 is a flowchart representing processing of image data recording applied by the data recording apparatus 1; and
Figs. 3(a) and 3(b) each is a drawing showing the area for recording the information on paid charges, AV equipment reproduction file and PC reproduction file in a CD-R specifically designed for the data recording apparatus 1.

In the following description, like parts are designated by like reference numbers throughout the several drawing.

### BEST MODE FOR CARRYING OUT THE INVENTION

The following describes the preferred embodiments of the present invention with reference to drawings:

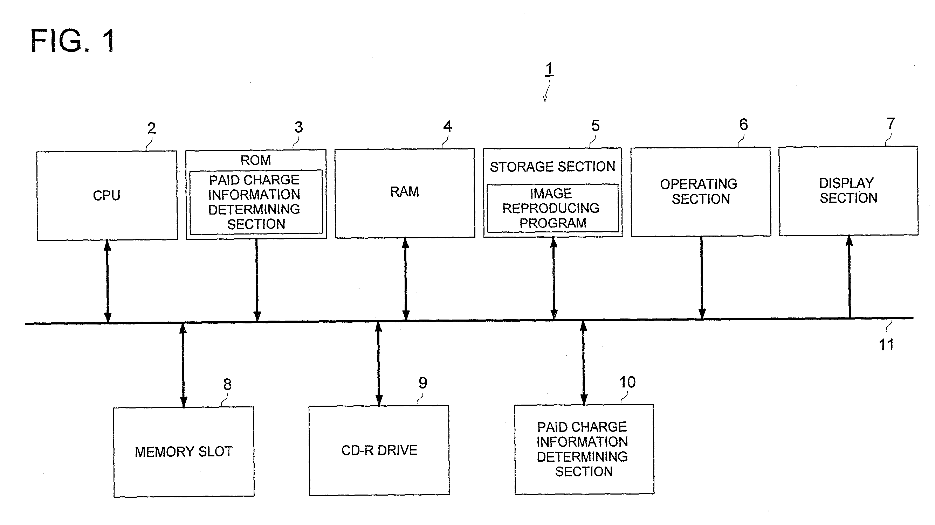

Fig. 1 shows a functional configuration of the data recording apparatus 1. The data recording apparatus 1 records the image data recorded on the memory card brought by a user, on the CD-R. The data recording apparatus 1 is installed at a photo shop, convenience store and such related shops.

As shown in Fig. 1, the data recording apparatus 1 consists of a CPU (Central Processor Unit) 2, ROM (Read Only Memory) 3, RAM (Random Access Memory) 4, storage section 5, operating section 6, display section 7, memory slot 8, CD-R drive 9 and paid charge information determining section 10. Each component is connected through a bus 11.

The CPU 2 extends the program designated from among various programs recorded on the ROM 3, in the work area of the RAM 4, according to the instructions entered from the operating section 6 to apply various types of processing in cooperation with the aforementioned program. The result of processing is stored in a predetermined area of the RAM 4.

The ROM 3 consists of a nonvolatile semiconductor memory. The ROM 3 stores various types of programs and data of the data recording apparatus 1 executed by the CPU 2.

The RAM 4 consists of a semiconducting element capable of rewriting. The RAM 4 is a storage medium for storing data temporarily. It contains a program area for extending the program to be implemented by the CPU 2, and a data area for storing the data inputted from the operating section 6 and the results of various types of processing applied by the CPU 2.

The storage section 5 includes an HDD (Hard Disk Drive), and stores the image data read from the memory slot 8. The storage section 5 also stores an image reproducing program to allow a PC, game machine and DVD (Digital Versatile Disk) player to reproduce image data. The image reproducing program has a function of displaying still image data, reproducing moving image data, and providing a sequential display of these image data items, thereby giving a slide show. When image data storage instruction is given by the CPU 2, the storage section 5 identifies the unoccupied space in the HDD and stores the specified image data into the unoccupied area. Further, when program or data read-out instruction is given by the CPU 2, the specified data is read out of the HDD and is outputted to the CPU 2.

The operating section 6 is equipped with numeral keys and various function keys. If one of these keys has been depressed, the corresponding signal is outputted to the CPU 2. This operating section 6 may be composed of a touch panel integrally built with the display section 7.

The display section 7 is composed of an LCD (liquid crystal display) and others, and provides an image display according to the display signal from the CPU 2.

The memory slot 8 is configured to allow insertion of a memory card. The memory card stores a plurality of still image data captured by a digital camera and a plurality of moving image data captured by a digital camera and video camera. The memory slot 8 reads the image data recorded on the memory card under the control of the CPU 2 and outputs it to the CPU 2.

The CD-R drive 9 is configured to allow insertion of a CR-D. The CD-R drive 9 writes the image data stored in the storage section 5 and image reproducing program, under the control of the CPU 2. Under the control of the data CPU 2, the CD-R drive 9 reads information on paid charge from the CD-R. The information on paid charge is the information showing that the user has already paid the change for the services provided by the data recording apparatus 1.

The paid charge information determining section 10 allows the CD-R drive 9 to read the information recorded in the CD-R, and, based on this information of the CD-R, determines if paid charge information is recorded on the CD-R or not. For example, a predetermined folder or file of the CD-R is searched to determine if the relevant folder or file is present or not. The paid charge information determining section 10 is operated by software processing through cooperation between the paid charge information determining program stored in the ROM 3 and the CPU 2.

The manufacturer of the CD-R used in the data recording apparatus 1 keeps a CD-R, specifically designed for the data recording apparatus 1, having a paid charge information recorded thereon, at a photo shop, convenience store or such a related shop where the data recording apparatus 1 is installed. The user purchases a CD-R specifically designed for the data recording apparatus 1 and utilizes the services provided by the data recording apparatus 1.

The following describes the operation of the data recording apparatus 1 as an embodiment of the present invention:

The description of the operation is based on the assumption that the program for applying the following processing shown in the flowchart is stored in the ROM 3 in the form of the program that can be read by the CPU 2 of the data recording apparatus 1, and the CPU 2 sequentially executes the operation in conformity to the relevant program code.

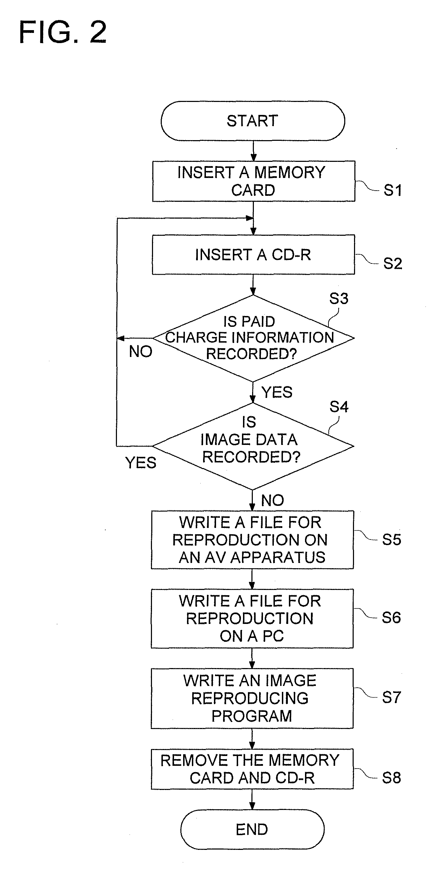

Fig. 2 is a flowchart representing processing of image data recording applied by the data recording apparatus 1.

In the first place, the memory card brought by the user is inserted into the memory slot 8 (Step S1). Then the CD-R with image data to be written thereon is inserted into the CD-R drive 9 (Step S2).

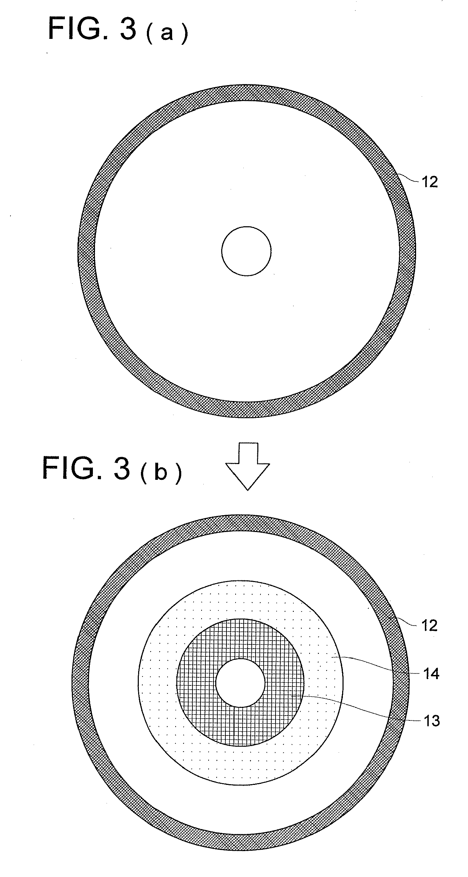

The paid charge information determining section 10 determines if the paid charge information is recorded on the CD-R or not (Step S3). As shown in Fig. 3 (a), paid charge information is recorded in the outermost area 12 that can be identified only by the paid charge information determining program.

If paid charge information is not recorded on the CD-R (Step S3; NO), the display section 7 shows a message prompting insertion of a CD-R designed specifically for the data recording apparatus 1.

If paid charge information is recorded on the CD-R (Step S3; YES), evaluation is made to determine if the image data is recorded on the CD-R or not (Step S4). If the image data is already recorded (Step S4; YES), the display section 7 shows a message prompting insertion of a new CD-R without image data recorded thereon.

If paid charge information is not recorded on the CD-R (Step S4; NO), the image data recorded on the memory card is read and the read image data is stored in the storage section 5. The image data stored in the storage section 5 is recorded on the CD-R in the file format suited for reproduction on such AV equipment as a game machine and DVD player (Step S5). It is then recorded on the CD-R in the file format suited for reproduction by the PC (Step S6). In a home electronic appliance such as AV equipment, the capacity of the mounted memory is smaller, so that data is sequentially read out from the inside of the disk such as a CD-R in many cases. Thus, as shown in Fig. 3 (b), the file for reproduction by the AV equipment is recorded in the area 13, the innermost side of the disk, and the file for reproduction by the PC is recorded on the outer area 14 thereof.

Then the image reproducing program stored in the storage section 5 is recorded on the CD-R (Step S7), and the CD-R and memory card are taken out (Step S8). Processing of image data recording is now complete.

Thus, in the data recording apparatus 1 as an embodiment of the present invention, only when paid charge information is recorded on the CD-R, the read image data is recorded on the CD-R. This arrangement prevents the read image from being recorded on the recording medium other than the CD-R with paid charge information recorded thereon. This configuration allows the recording area of the same configuration to be used, whereby smooth recording operation is ensured.

In the embodiment of the present invention, paid charge information is recorded in the outermost area 12 of the CD-R. However, it can be recorded at any area except for the areas 13 and 14 where the file of the read image data is written or the area where the image reproducing program is written.

The description in the present embodiment has referred to the case where paid charge information is recorded on the CD-R as identification information. However, without being restricted thereto, there is no problem if there is a record of identification information, showing that the CD-R is designed specifically for the data recording apparatus 1, such as the capacity of the data that can be written, the number of files that can be written and the name of the CD-R manufacturer.

Further, the description in the present embodiment has referred to the case of image data as the data rerecorded on the CD-R. It is also possible to include such audio data as sound data and music data.

Further, the program recorded on the CD-R is not restricted to the image reproducing program alone. It can be another program that executes the function specific to the PC, DVD player. Such a program includes an image processing program for applying processing of correction of color, density and chroma correction, image rotation or trimming to the image data, and an order information generating program for creating an electronic album where still image, moving image and audio data are combined and are sequentially reproduced after time for each of them has been specified.

In the data recording apparatus 1, it is also possible to make such arrangements that only conversion of media for image data from the memory card to the CD-R is carried out, where a program for allowing a PC, game machine or DVD player to perform a specific function is not recorded on the CD-R.

The aforementioned image reproducing program can be recorded on the CD-R in advance. In this case, since the image reproducing program is recorded on the CD-R in advance, there is no need of spending time for recording the image reproducing program on the CD-R. This means a reduction of the CD-R recording time. In this case, it is also possible to make such arrangements that evaluation is made to determine whether the image reproducing program is recorded or not, instead of whether paid charge information is recorded on the CD-R or not, thereby making sure that the CD-R is designed specifically for data recording apparatus 1.

In the present embodiment, the image data read by the data recording apparatus 1 is recorded on the memory card. The image data can be recorded on various types of digital recording media such as a floppy disk (registered trademark), CD-ROM (Compact Disk Read Only Memory) and DVD. It is possible to use the image data obtained by using a scanner to read out the image recorded on various types of analog recording media such a negative and reversal film captured by an analog camera. Further, the image data can be read from a plurality of recording media.

In the present embodiment, the data recording apparatus 1 records image data on the CD-R. The present invention is not restricted to this configuration; an optical disk or DVD can also be used.

### INDUSTRIAL APPLICABILITY

The present invention allows the read image data and/or audio data to be recorded on a second recording medium only when identification information is recorded on the second recording medium. This prevents the read image data and/or audio data from being recorded on the recording medium other than the second recording medium. This arrangement permits the recording areas having the same configuration to be used, thereby ensuring a smooth recording operation.

The present invention allows the read image data and/or audio data to be recorded on a second recording medium only when paid charge information is recorded on the second recording medium. This configuration prevents the read image data and/or audio data from being recorded on the recording medium other than the second recording medium where paid charge information is recorded.

It is to be noted that various changes and modifications will be apparent to those skilled in the art. Therefore, unless such changes and modifications depart from the scope of the present invention, they should be construed as being included therein.

## Claims

1. A data recording apparatus comprising:
a read section for reading image data and/or audio data recorded on a first recording medium; and
a write section for recording said read image data and/or audio data on a second recording medium;
said data recording apparatus **characterized by** having an identification information determining section for determining whether identification information is recorded in said recording medium or not, to ensure that, only when said identification information determining section has determined that identification information is recorded, said write section records the read image data/audio data on said second recording medium.

2. The data recording apparatus of Claim 1 wherein said identification information is paid charge information.

3. A program allowing a computer to perform a read function for reading the image data and/or audio data recorded on a first recording medium, an identification information determining function for determining whether identification information is recorded on a second recording medium or not, and a write function for recording said read image data and/or audio data on the second recording medium only when it has been determined that identification information is recorded on the second recording medium.

4. The program of Claim 3 wherein said identification information is paid charge information.
